# EUROPEAN PATENT SPECIFICATION

(11) **EP 2 229 082 B1**
(45) Date of publication and mention of the grant of the patent: **28.12.2011**
(21) Application number: 09701829.5
(22) Date of filing: 15.01.2009
(51) Int. Cl.: A47J 31/36, A47J 31/06

(54) **SEALING ADAPTER FOR A BEVERAGE EXTRACTION SYSTEM SUITABLE FOR PREPARING A BEVERAGE FROM CARTRIDGES**
DICHTUNGSADAPTER FÜR EIN GETRÄNKEZAPFSYSTEM, GEEIGNET ZUR HERSTELLUNG EINES GETRÄNKS AUS PATRONEN
ADAPTATEUR D'ÉTANCHÉITÉ POUR UN SYSTÈME D'EXTRACTION DE BOISSON ADAPTÉ À LA PRÉPARATION D'UNE BOISSON À PARTIR DE RECHARGES

(30) Priority: 15.01.2008 EP 08100463
(43) Date of publication of application: 22.09.2010
(60) Divisional application: 10182951.3
(73) Proprietor: Nestec S.A., 1800 Vevey (CH)
(72) Inventor: KOLLEP, Alexandre, 1095 Lutry (CH); DENISART, Jean-Paul, 1093 La Conversion (CH); KAESER, Thomas, 1817 Brent (CH); COLANTONIO, Jean-Luc, 1564 Domdidier (CH)
(74) Representative: Borne, Patrice Daniel
(86) International application number: PCT/EP2009/050400
(87) International publication number: WO 2009/090201

(56) References cited:
- EP-A- 1 203 554
- EP-A- 1 654 966

## Description

The present invention relates to the field of the preparation of beverages from single-use cartridges in an extraction device designed to accept such cartridges.

The technological background of the invention relates to the field of cartridges containing edible ingredients such as ground coffee and which are extracted under hot water pressure in a beverage extraction device. The hot water is injected into the cartridge via an injection face using a piercing system, for example, the pressure of the fluid increases in the cartridge until another face of the cartridge is perforated or pierced by perforating means under the effect of the pressure so that the extract is delivered from the cartridge. A multitude of reliefs belonging to the perforating means allows controlled openings to be formed in the face of the cartridge while at the same time filtering the extract enough that the coffee grounds are kept inside the cartridge.

A system such as this employing this method is known, for example, from patent EP 0512470 B1.

Patent application EP 1 654 966 proposes an improvement for providing better sealing upon closure of the extraction system so as to better control the extraction characteristics, particularly the opening and extraction pressures. To do that, the cartridge is equipped with an attached seal or a seal that forms an integral part of the cartridge so that each new cartridge extracted seals perfectly into the extraction system, thereby avoiding any risks of water leaking through the cartridge nip region to the outside. An advantage of the invention is that it provides a renewed seal each time a cartridge is used. Another advantage is that it allows the cartridge to be released more easily by preventing the cartridge from "sticking" in the cartridge cage through the effect of suction or vacuum. To do that, the invention may provide air passages such as grooves on the bearing surface of the cartridge cage.

In order to obtain a satisfactory seal, the seal supported by the cartridge needs to include a sufficient thickness of deformable material. This seal needs to be sized in such a way that it is compressed enough to fully compensate for any separation after closure and when the device is at its maximum pressure during extraction. Now, it has been found that the injection pressure, which may be as much as 12-20 bar, tends, at these high pressure levels, to cause the device to open up by the order of a few tenths of a millimetre at the cartridge nip region. The seal needs therefore to be able to compensate for such "dynamic" separation. If the seal is not thick enough, there is then insufficient compensation and leaks occur meaning that the increase in pressure in the cartridge cannot occur correctly.

However, increasing the thickness of the seal on the cartridge in order to solve this problem of separation leads to additional cost in the production of the cartridge.

In order to resolve this problem, co-pending patent application PCT/EP07/059930 proposes an injection cage which comprises a base and a closure piston unit which is mounted so that it can move axially with respect to the said base; the said closure piston unit can move relative to the base under the effect of the pressure of the fluid against the nip region of the cartridge in order to generate clamping forces that prevent the injection cage and the cartridge support from opening up relative to one another as the system is pressurized.

However, it may also be desirable to use cartridges with no such own sealing member in this extraction system as described whereas still obtaining a rise in pressure with reduced leakage or no leakage at all, thus enabling the opening of the membrane of the cartridge under pressure.

However, with such a cartridge without specific sealing member placed in the extraction device, injected liquid would by-pass the cartridge and leak out between the cartridge cage and the cartridge's nip and the cartridge would not open as pressure in the cartridge would remain too low. Therefore, the extraction device would only accept cartridges onto which a specific sealing member has been placed thereon.

It is an object of the present invention to provide a solution to these problems.

According to an important characteristic of the invention, the extraction system is provided with a cartridge sealing adapter. Therefore, the cartridge adapter can be neither a part of the cartridge nor a part of the extraction device per se but it can be a separate part which is insertable between the extraction device and the cartridge to provide a sufficient tightness enabling the rise in pressure to take place in the cartridge and the cartridge to open, after a certain delay, for release of the liquid extract out of the cartridge.

For this, the invention relates to a beverage extraction system for preparing a beverage from a single-use cartridge using fluid injected under pressure according to independent claim 1.

In a possible mode, the cartridge sealing adapter is removably connected to the cartridge cage. Therefore, it can be connected to the cartridge cage by the user for enabling the sequential preparation of beverages from a limited number of cartridges and can be removed from the cartridge cage for replacement or for enabling the insertion of a different cartridge, e.g., a cartridge comprising its own sealing member.

The invention also relates to a kit intended for a beverage extraction system according to independent claim 6.

In particular, the cartridges of the kit may have a dished body and membrane made of plastic and/or aluminium alloy. The cartridges may contain ground coffee or another beverage or food ingredient. In particular, the cartridges have a nip surface which is free of a fixed or integrated seal member.

The invention also relates to a method for inserting a cartridge sealing adapter into a beverage extraction device according to independent claim 8.

In one mode, for placing the sealing adapter to a part of the beverage extraction device, e.g., onto the cartridge cage, a liquid or viscous sealing material is placed in a receiving portion of the die which becomes solid when the die is pressed to the part of the device. A pause can be allowed during the pressing step to allow the sealing material to become solid and/or to fix to the part. The pause depends on the solidifying conditions of the sealing material and may last for example from a few seconds to several hours. In particular, the sealing material may be a polymer that polymerizes when the die is pressed relatively to the part, e.g., to the cartridge cage. Polymerization may be carried out at ambient temperature or by applying heat. The sealing material may also become solid by relative cooling, from a liquid or viscous melted material. For instance, the sealing material may be a liquid silicone rubber or a liquid rubber adhesive.

In another mode, a solid sealing adapter comprising a connection portion for connecting to the part of the device, e.g., the cartridge cage, is placed in the die. The connection portion can have a mechanical anchoring portion or an adhesive portion such as an adhesive layer. For instance, the sealing adapter can be a piece of rubber-elastic material with an adhesive layer or a clip means that mechanically connects by pressure to the pressing edge of the cartridge cage.

Other characteristics of the invention are described in the appended dependent claims.

### Brief Description of the Drawings

Figure 1 is a view in partial section and in perspective of the beverage extraction system, depicting the system in a first state of operation, in particular, in the opening mode with the insertion of a cartridge with a sealing member according to EP 1 654 966 in the extraction device;
Figure 2 is a view in partial section and in perspective of the extraction system according to the invention, depicting the system in a first state of operation, in particular, with a cartridge sealing adapter being placed between the cartridge cage of the device and a cartridge without specific sealing member thereon;
Figure 3 is an enlarged view in cross section of the beverage extraction system of the invention with the cartridge sealing adapter in place in the cartridge cage of the device;
Figure 4 is an enlarged view in cross section and perspective of the extraction system of the invention with the cartridge sealing adapter in place in the cartridge cage of the device in the closed mode of beverage extraction;
Figure 5 is an enlarged view in cross section and perspective of the beverage extraction system of the invention with a variant of cartridge sealing adapter in place in the cartridge cage of the device in the closed mode of beverage extraction
Figure 6 is a schematic view of another embodiment of the beverage extraction system of the invention, in particular, with a shorter cartridge sealing adapter;
Figure 7 is a schematic view of a cartridge sealing adapter according to a first embodiment;
Figure 8, is a schematic view of a cartridge sealing adapter according to a second embodiment;
Figure 9 is a schematic view of a cartridge sealing adapter according to a third embodiment;
Figure 10 is a schematic view of a cartridge sealing adapter according to a fourth embodiment;
Figure 11 is a perspective view of a kit of a cartridge and cartridge sealing adapter according to a fifth embodiment;
Figure 12 is a perspective view from above of the kit when assembled before placing in the beverage extraction device;
Figure 13 is a perspective view from below of the kit of figure 12;
Figure 14 shows a cartridge cage with another cartridge sealing adapter which is a variant of the one of figure 6,
Figure 15 is a cross sectional schematic view of a beverage extraction device with a die for applying a sealing adapter to the device,
Figure 16 is a cross sectional view similar to figure 15 but in closed position,
Figure 17 is a cross sectional view similar to figure 15 but with the sealing adapter being attached to the device.

### Detailed Description

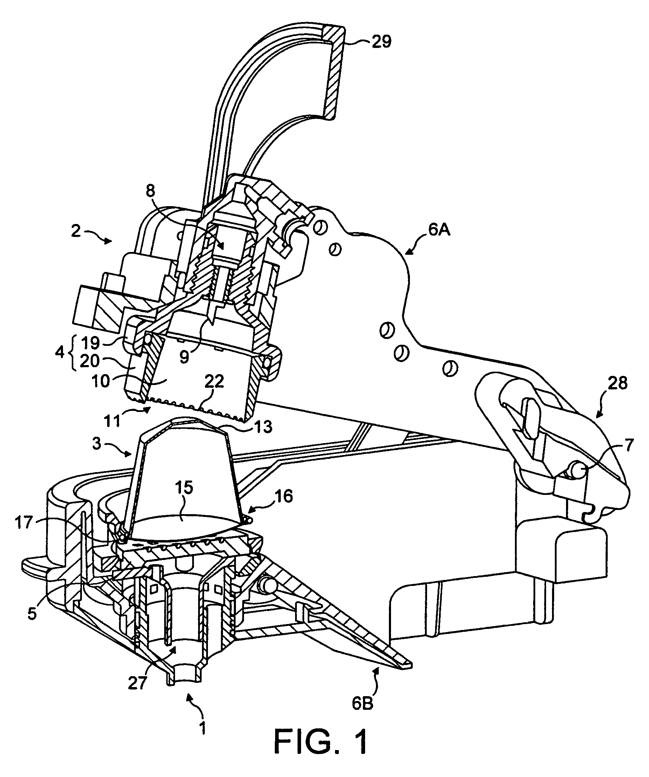

With reference to Figure 1, the beverage extraction system 1 according to the invention, as depicted by way of nonlimiting examples, is made up of a beverage extraction device 2 in which there is housed a cartridge 3 containing a food ingredient for preparing a beverage. Preparation is typically obtained by injecting a pressurized fluid, i.e., hot water under pressure and/or steam, into the cartridge and extracting the ingredient under the pressure of this fluid. The cartridge is a disposable cartridge and the spent cartridge is therefore generally thrown away or recycled. A new cartridge is then inserted into the device.

The "device-cartridge" assembly is known as the "beverage extraction system" in the context of the present application. As will become obvious in what follows of the description, the device and the cartridge constitute means which cannot operate without one another and which interact physically and to complement one another in order to extract the liquid extract that is intended to form the beverage.

The beverage extraction device as such is an assembly comprising an injection cage 4 and a cartridge support 5. The injection cage and the cartridge support are able to move relative to one another to close up around the cartridge 3. In this instance, the injection cage 4 is mounted on a mobile upper structure 6A, while the cartridge support 5 is mounted on a fixed lower structure 6B; the upper structure moving closer to the lower structure through a pivoting movement about an axis of articulation 7. The opposite could be anticipated, that is to say a cartridge cage that was fixed and a cartridge support that was able to move or alternatively, it could be anticipated for the two parts to move one towards the other. The dynamics governing the closing-up of the injection cage and the cartridge support is subject to numerous possible variants. Indeed, dynamics in which the parts move closer together in a linear path (rather than in a non-linear curve) is one possible variant. Also, the injection cage and cartridge support can be positioned and movable relatively one another in any possible axial configurations which are not necessarily aligned in a vertical axis of reference.

The injection cage means the part containing means for injecting a pressurized fluid into the cartridge. These means usually comprise at least one main fluid supply duct 8 and means of opening the cartridge. The opening means may, for example, be piercing elements 9 whose function is to create one or more openings in the cartridge in order to allow the fluid in. The piercing means may be separate from the duct 8, as illustrated. They may, for example, be elements in the form of blades, needles or spikes. In one variant, the duct may continue through the piercing element as such. Other opening means may be anticipated, according to the nature of the cartridge.

The injection cage has an internal cavity 10 which accepts the injection wall 13 of the cartridge upon closure. The internal cavity 10 may vary in depth according to the shape of the cartridge. The free end of the cage has a nip surface 11. The injection cage is connected to a system for supplying the device with fluid which, in Figure 1, is depicted only in part for purposes of simplicity. The fluid supply system generally comprises a water tank, a pressure pump and ducts for transporting the fluid, a water heater, such as a thermobloc, for example, to convey the fluid at the desired temperature for extraction. The pump may be an electromagnetic piston pump capable of developing a static pressure of several bar or any other type of equivalent pump.

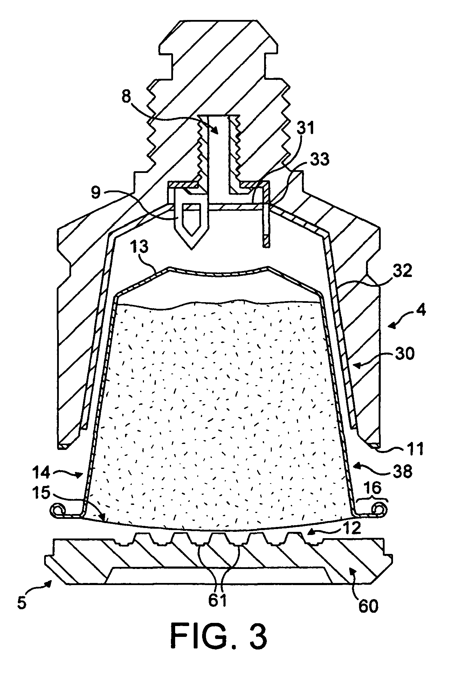

The cartridge support 5 has an extraction surface 60 allowing the cartridge to be perforated under the effect of the increase in pressure in the cartridge. To do that, as shown in Figure 3, the surface has at least one relief, preferably a series of reliefs 12, forming means of perforating the cartridge. The reliefs may differ in geometry according to the type of cartridge and the desired extraction conditions. In the example, each relief is in the shape of a truncated pyramid. A network of channels 61 is formed through which the liquid extract can flow between the structure of reliefs so that liquid can be collected in a container (dished body or the like).

As shown in Figure 1, the cartridge 3 has normally an injection wall 13 which may be closed at the time the cartridge is inserted into or deposited in the device. The injection wall may be formed in a dished body 14 (for example in the shape of (a) cone frustum(s)). The cartridge has a delivery foil or membrane 15 through which the extract needs to be able to flow once openings have been made by the perforating means 12 of the extraction surface of the support. A wall or membrane 15 such as this may be a membrane made of aluminium, plastic or plastic/aluminium laminate. For example, the wall is an aluminium foil a few tens of a micron (e.g., 20-40 microns) thick which tears when it reaches its rupture stress upon contact with the reliefs 12 at a pressure that may range between 6 and 20 bar depending on the cartridge, the ingredients and the thickness of the membrane. The dished body of the cartridge may be made of a rigid or semi rigid material such as aluminium (or an aluminium alloy), plastic or a plastic-aluminium laminate.

The cartridge comprises a nip region 16 via which it is trapped when the device is closed onto the cartridge. Trapping is achieved by bringing the injection cage 4 and the extraction support 5 closer together and then clamping them on either side of the said nip region 16. The nip region 16 is formed of a border running around the periphery of the cartridge. The border may, at least in part, be formed of the body of the cartridge. The membrane 15 may be assembled with the underside of the border in the nip region 16 by sealing or welding. According to PCT/EP07/059930, in order to obtain the necessary fluid tightness, the nip region would generally comprise a sealing means in the form of a seal 17 that is part of the cartridge and which occupies all or some of the border. The seal 17 is preferably an element made of a deformable material that is relatively soft and attached or fixed against the rim or nip region.

The injection cage is designed to be pressurized in such a way as to increase the closure forces against the nip region after the device has been mechanically closed. To do that, the injection cage comprises a base 19 and a piston unit 20 which is mounted axially with respect to the base with the ability of controlled movement.

According to another feature, means for detaching the cartridge provided, thereby avoiding a vacuum effect in the nip region. To do that, the nip surface 11 of the cage preferably forms discontinuous nip portions comprising corrugations formed, for example, by radial indentations 22 and radial recesses between these indentations 22. These recesses promote the air from entering the injection cage after the beverage extraction and opening of the device and facilitate the removal of the cartridge from the cage. The number and positioning of these recesses are not critical per se. In absence of a seal member 17, the radially oriented corrugations, e.g., the indentations 22, would allow water to leak, on the outer surface of the cartridge, through the nip region and consequently would create an insufficient pressure in the cartridge for proper extraction of the ingredients. Furthermore, the membrane would likely not tear or at least not sufficiently tear against the support 5. Therefore, according to a feature of the invention, a seal adapter is provided for ensuring a seal effect between a cartridge which does not bear a specific seal member and the beverage extraction device.

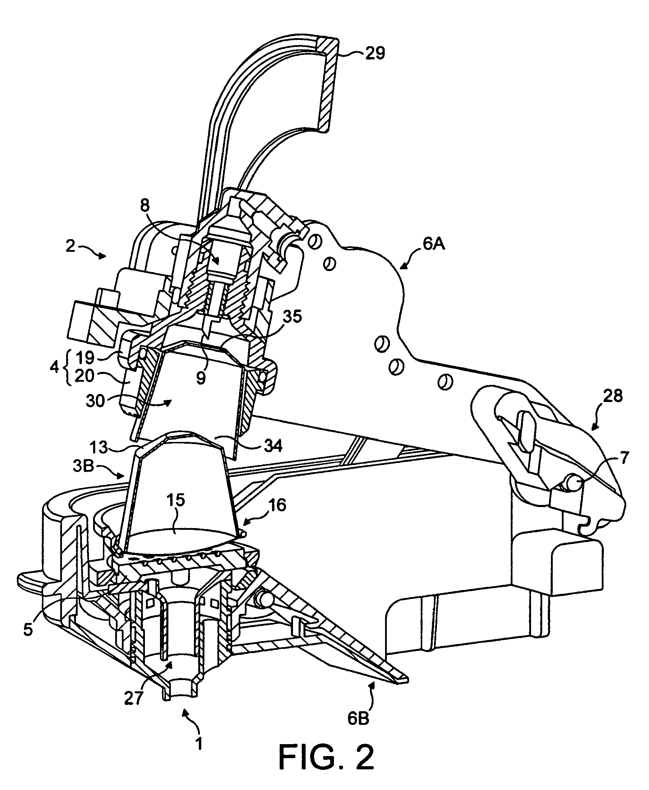

For this, as illustrated in figure 2, the cartridge 3 has been replaced by a cartridge 3B of slightly smaller size which does not comprise any sealing member at its nip region 16. Instead of this, a cartridge sealing adapter 30 (called in short: "cartridge adapter" in the rest of the description) is inserted in the injection cage 4 to create the sealing effect along at least a portion of the wall of the dished body. The cartridge adapter thus provides a sealing barrier to the liquid coming out of the injection means, i.e., the supply duct 8 and piercing blades 9. The cartridge adapter may be placed between the injection means 8, 9 and the radial indentations 22 of the nip surface 11, when the cartridge is tightly encased between the cartridge cage 10 and the cartridge support 5 therefore enabling the pressure to rise inside the cartridge and the delivery membrane to fully perforate against the cartridge support.

In a possible mode, the cartridge adapter is shorter than the cartridge itself 3 so that the cartridge adapter ends internally above the said pressing edge and inside the cartridge cage. Therefore, the cartridge adapter 30 is inset in the cage with respect to the nip surface 11 of the cartridge cage. This has the advantage that the edge is not thickened by the material of the adapter and so this does not increase too much the closing forces to be exerted by the closing structures 6A, 6B.

Of course, in a possible mode the cartridge sealing adapter can be placed to fill the at least one recess at the nip surface 11 of the cartridge cage 4. The cartridge adapter can thus extend or be placed directly at the nip surface 11 of the extraction head to sufficiently close the recesses formed by the indentations 22 and thus prevent any significant leakage of water outside the surface of the cartridge through the nip between the cartridge and the cartridge cage.

In figure 2, the cartridge adapter 30 has a truncated shape which has a lower open side 34 for receiving the cartridge and an open upper side 35 of large enough section to let the piercing members 9 engage and pierce the top of the cartridge directly upon closing of the device.

The cartridge adapter 30 may be attached in the cartridge cage by different connection means. Depending on the connection means, the adapter can be removed after a limited number of extractions or can be permanently attached in the cartridge cage once placed by the user in the cage. Preferably, a removable connection means is used so that the cartridge adapter can be exchanged by a new one after a limited number of extraction cycles.

The cartridge adapter is primarily intended to be inserted by the user himself before or at the time a cartridge is placed in the extraction device. In a possible mode, the cartridge adapter is placed for more than one extraction cycle. For this, the outer surface of the adapter has a greater surface adhesiveness with respect to the cartridge cage than the inner surface of the adapter has an adhesiveness with respect to the cartridge so that upon opening of the extraction device and removal of the cartridge, the cartridge adapter 30 is retained in place in the cartridge cage 4.

The terms "adhesiveness" or "adhesive" refer hereby broadly to the creation of any gripping or sufficient friction force between the surface of the cartridge adapter and the surface of the cage or the surface of the cartridge which can prevent separation of the adapter from the cartridge cage upon opening of the device and removal of the cartridge. Therefore, the terms are not limited to particular connection means but can encompass any mechanical anchoring, friction, thermal expansion, heat or pressure sensitive or physico-chemical adhesive means, e.g., polymerization, and combinations thereof.

In one mode, the cartridge adapter may be press-fitted in the cartridge cage. For this, the cartridge adapter may be made of a deformable material and be sized slightly bigger than the internal size of the cartridge cage. The cartridge adapter may also be adhesively connected in the cartridge cage. Any suitable adhesive means may be used such as chemical adhesive, mechanical anchoring means or thermally sensitive adhesive means. For instance, the cartridge adapter may comprise an outer surface which is treated to adhere to the material of the cage once temperature exceeds a certain threshold, e.g., above 50 degree Celsius.

In figure 3, according to another mode, the cartridge adapter may have a truncated shape with a closed top end 31 and a truncated base 32 that substantially fit in the shape of the cartridge cage. The adapter may be press fitted inside the cage and its top end be further anchored by the piercing members 9 traversing it. The adapter may comprise slits or holes 33 through which the piercing members can be tightly fitted. For this, the adapter may be made of a resilient material and the slits or holes may be of a size slightly smaller section than the section of the piercing members. The holes or slits serve as valves for water under pressure to enter the cartridge during extraction. The adapter may be further attached by an adhesive to the cartridge cage or by other connection means. The slits or holes may also be pierced in the cartridge adapter directly by the piercing members 9 during the insertion of the cartridge adapter and closing of the device on a cartridge or a rigid preform representing the outer shape of a cartridge. As illustrated in this figure, the cartridge cage 4 can also be an integral piece with no hydraulic piston assembly as in the preceding mode of figure 2.

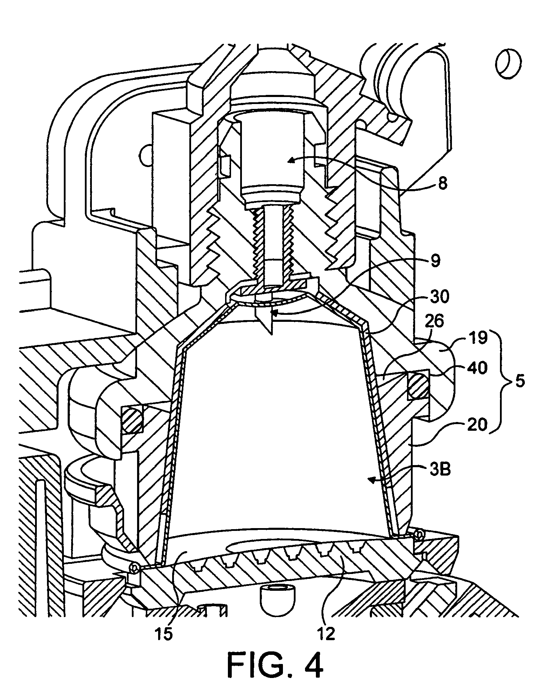

Figure 4 shows the extraction step proper. An injection fluid is sent through the supply duct 8 by the pump of the device until the pressure in the cartridge 3B and the internal cavity increases. The pressurized fluid is prevented to circulate at the exterior side of the cartridge 3B because of the presence of the cartridge adapter 30 which blocks water just below the piercing members 9. Therefore, water can fill the cavity of the cartridge through the perforations provided through the top wall of the cartridge. During the extraction process, thanks to the fact that sealing is maintained by the cartridge adapter on the external surface of the cartridge, the pressure exerted on the membrane 15 against the reliefs reaches a value (ranging between about 6 and 20 bar according to the cartridge) such that it leads to the tearing of the membrane against the reliefs 12 reaching the rupture stress of the material of the membrane. The membrane therefore tears in a controlled and localized way to form openings at the corners of the reliefs. In some cases, the pressure in the cartridge may continue to increase appreciably because of any possible compaction of the bed of coffee in the cartridge. The extraction is filtered by the membrane and by the reliefs. The extract is collected in the channels of the extraction support as far as holes (not featured) made through and/or on the sides of the support. It can be noted that water does not reach the piston chamber 40 since it is blocked upstream by the cartridge adapter. Therefore, the piston 20 does not move downwards with respect to the base 19 of the cage. In this case, there is no axial force compensation hydraulically exerted by the "dynamic" cartridge cage, e.g., by a piston member, since the closing force on the cartridge is carried out by the base 19 of the cartridge cage which compresses the cartridge adapter on the upper part and side wall of the cartridge.

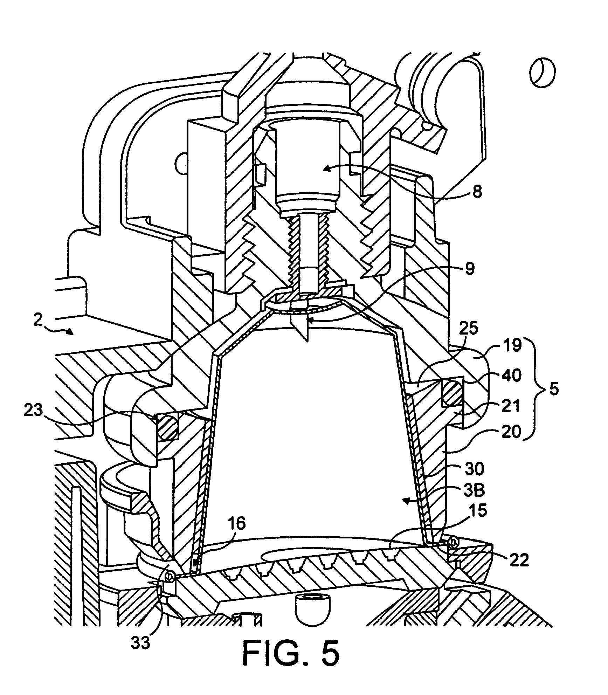

In figure 5, the cartridge adapter 30 has a form of a shorter truncated ring which is inserted against the surface of the piston 20 and ends below the surface of the base 19 of the cartridge cage. In this case, water can flow in the piston chamber 40 and push the piston 20 downwards to press on the nip region 16 of the cartridge.

In general, the cartridge adapter 30 may be formed of rubber-elastic material or of deformable soft plastic such as a deformable and resilient foam. For example, the cartridge adapter may be made of silicone rubber or thermoplastic elastomer (TPE). The thickness of the adapter may vary depending on the size of the cartridge to be received. Cartridges would normally be smaller than the cartridges with their own sealing member due to the larger possible volume occupied by the cartridge adapter in the cartridge cage. Therefore, the cartridge adapter must compensate for the reduction of thickness of the cartridge while also guaranteeing a pressure resistant sealing effect between the cartridge and the cartridge cage. Preferably, the thickness of the cartridge adapter is between 0.1 and 5 mm, more preferably between 0.5 and 3 mm.

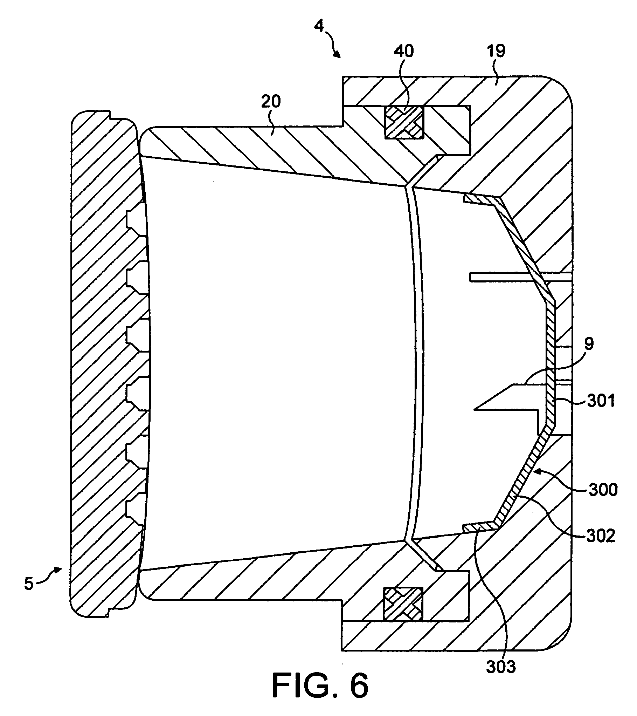

Figure 6 illustrates another possible embodiment of the system of the invention in which a shorter cartridge adapter 300 is arranged in the bottom of the cartridge cage 4. The cartridge adapter may have the form of a dish with a transversal top end wall 301 and two successive portions of short truncated walls 302, 303 and may be made of an impervious relatively deformable material such as rubber, soft plastic or compressed fiber.

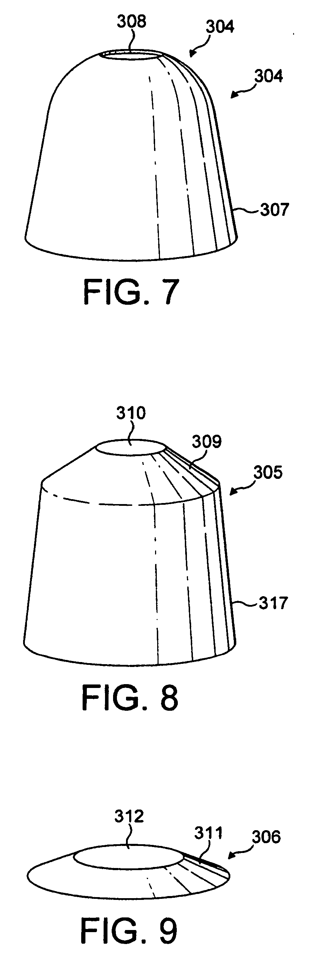

Figures 7 to 9 illustrate different possible configurations of cartridge adapters 304, 305, 306 of the invention.

In figure 7, the cartridge adapter 304 is a single generally truncated cone 307 with an open top side forming a passage 308 for the piercing elements of the injection means. The adapter may be made of rubber-elastic material.

In figure 8, the cartridge adapter 305 is a closed dish body comprising three successive portions of walls 317, 309, 310, more precisely, a large truncated portion 317 opened at its bottom followed by a shorter truncated portion 309 of larger angle followed by a transversal portion 310 of shallow inverted cone or flat transversal wall.

In figure 9, the cartridge adapter 306 is a closed dish body of short height comprising only two successive portions of walls: a short truncated portion of wall 311 followed by a transversal portion 312 of shallow inverted cone or flat transversal wall.

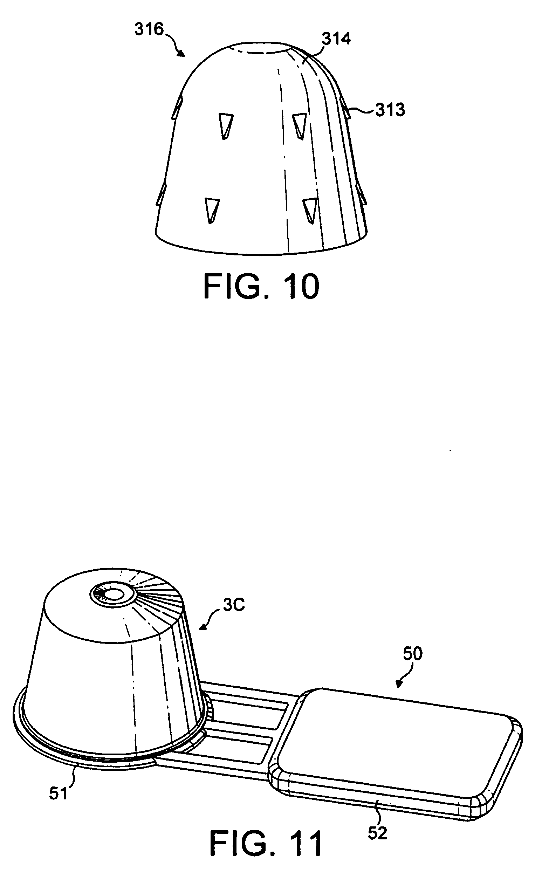

In figure 10 is illustrated a cartridge adapter 316 having a more rounded outer form which is rendered adhesive to the device by anchoring elements such as downwardly extending hooks 313 intended to provide mechanical gripping on the internal surface of the cartridge cage. The envelope 314 of the cartridge adapter may be formed of a soft rubber material such as silicone rubber and the hooks may be formed of metal or rigid plastic and may be partly embedded in the supple rubber material. In another possible mode, the anchoring elements could be provided by a roughened outer surface of the adapter.

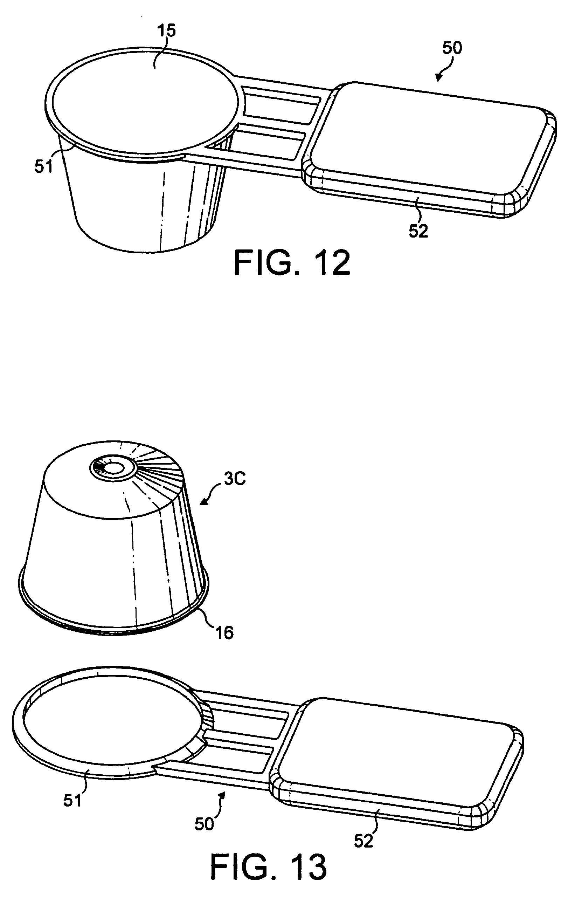

Figures 11 to 13 relate to another possible embodiment of the invention in which a cartridge adapter 50 forms a holder for the cartridge 3C itself enabling the cartridge to be placed in the extraction device while maintaining it in a water tight sealing manner at the nip region of the extraction device. For this, the cartridge adapter 50 comprises a sealing nip portion 51 forming a supporting ring for holding the cartridge and a handle 52 for placing the cartridge in the extraction device. The sealing nip portion 51 can be made in a rubber elastic or relatively soft plastic. The cartridge may comprise a shortened rim or nip region 16 forming a welding surface for the foil member 15 and a retaining edge for the sealing ring 51 of the adapter. The assembly formed by this sealing adapter and the cartridge can be inserted in an extraction device as described in relation to figures 1 to 5. The nip surface of the cartridge cage of the device is therefore pressed against the nip portion 51 of the adapter which thus causes the filling of the recesses between the indentations of the cage by the sealing material of the adapter.

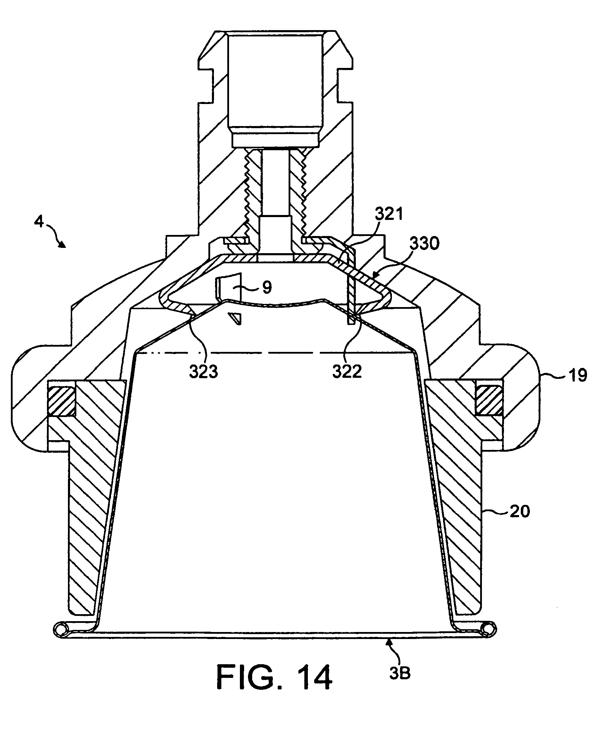

Figure 14 shows another possible variant of a cartridge cage 4 in which the sealing adapter 330 has a connection portion 321 and a deformable sealing portion 322. The resiliently deformable sealing portion can deliver a spring effect when put into compressive state by the cartridge being inserted in the cage. As illustrated, this end portion can take a resilient U-shape section turned in the direction of the internal cavity. When the cartridge 3B is inserted in the cartridge cage during closing of the extraction system, the upper surface of the cartridge contacts the resiliently deformable portion 322 which flexes or bends inwards while forming a sealing peripheral edge 323 pressing on the surface of the cartridge. The sealing adapter can be connected to the cartridge cage by any suitable connection means and/or simply by the gripping effect of the piercing elements such as the blades 9 being snuggly engaged through the adapter. For instance, the adapter may comprise a series of slits dimensioned relative to the sections of the blades in such a way that the blades can engage in a tight-fit engagement.

The sealing adapter can also be obtained from a hardenable polymeric liquid or paste product which is applied onto the surface of the injection cage in its softened state and subsequently hardened. The product can be applied to form a sufficiently sealing thickness onto the nip surface, e.g., in recesses between the indentations, and/or the internal surfaces of the injection cage in its softened state. The polymeric product may thus necessitate a pause and/or heating operation for solidifying the material, e.g., by polymerization, reticulation, drying or other physico-chemical hardening principles. For example, the material for the adapter can be a liquid silicone rubber or another hardenable rubber-elastic material.

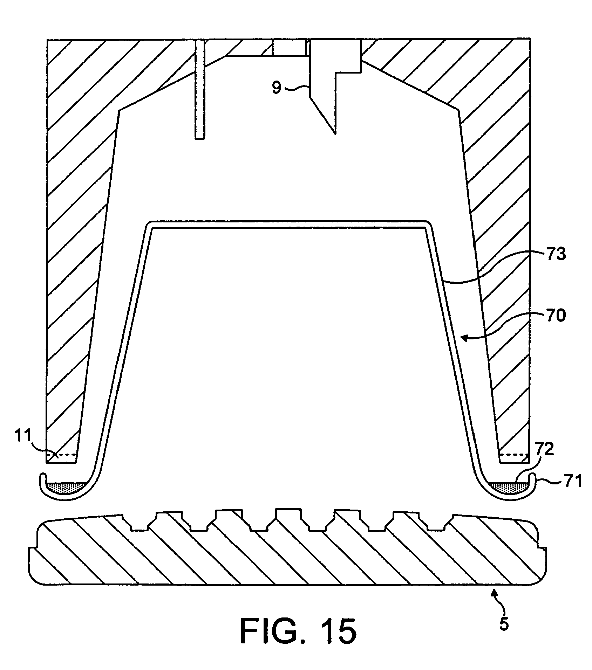

Figures 15 to 17 illustrate a method for applying a cartridge sealing adapter to the beverage extraction device. A die 70 is provided which comprises a die receiving portion 71 for receiving a mass of sealing material 72. The die receiving portion may form an annular reservoir which fits the dimension of the pressing edge 11 of the injection cage 4 or that can extend more largely in the interior of the cage. The die may extend by a central truncated portion 73 to facilitate handling of the die and to enable a proper positioning within the cavity of the cage during insertion and closing. The sealant material can be a liquid or viscous mass of plastic or rubber-elastic polymer that becomes solid (i.e., as opposed to liquid or viscous) and adheres to the surface of the cage. The die is thus inserted between the cage 4 and the cartridge support 5 after pouring a defined amount of the liquid or viscous sealant material in the receiving portion 71.

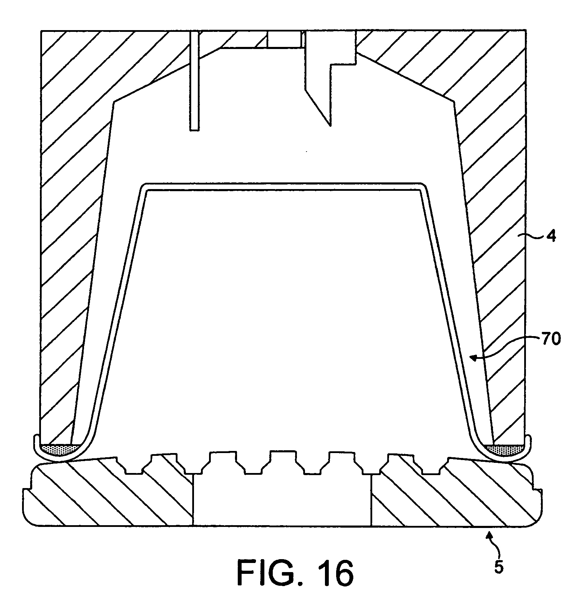

In figure 16, the beverage extraction device is closed by relative axial movement of the cage 4 and support 5 which causes the pressing edge 11 of the cage to enter into the receiving portion and contact the sealing material. The amount of pressure between the cage and the die may depend on the adhesive conditions of the sealant material. The pressure may be a simple contact or a pressure of several bars. The pressure may be controlled by the dimension (e.g., thickness) and/or shape of the die and/or by the degree of closure of the device (e.g., total or partial closure).

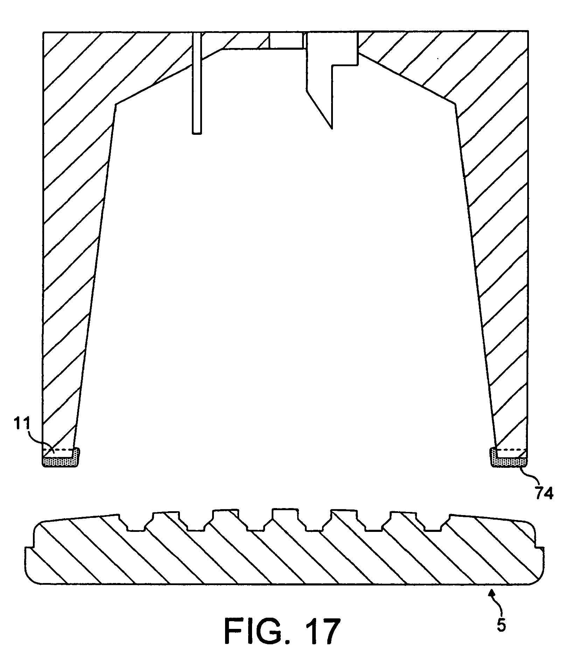

As it is shown in figure 17, After a certain pause time, the device is opened and the die is removed while leaving a layer of solidified sealant 74 forming the sealing adapter that fixes onto the pressing edge 11. The layer of sealant may be discontinuous or continuous on the pressing edge 11. For example, the sealant mass may only flatten the corrugated pressing edge 11 by only filling the radial recesses between the indentations. Alternatively, it may form a continuous circumferential layer at the pressing edge. Of course, depending on the configuration of the die, the sealant may be applied to any suitable part of the surface of the injection cage 4 such on its internal surface. For example, the entire surface of the cage 4 can be coated by rubber-elastic sealant material. Of course, many variations of this adapter application principle may thus be envisaged.

The invention also relates to a kit which comprises a series of cartridges 14 and at least one cartridge sealing adapter, as described, which inner form is designed in accordance with the outer form of the cartridges. Each cartridge of the kit may comprise a body and a membrane. The body and membrane can be formed of plastic and/or metal alloy. The cartridges may contain ground coffee of different coffee blends or specific coffee varieties or other beverage or food ingredients. In particular, the cartridges may have a nip surface which is free of a fixed or integrated seal member. The body of the cartridge can be made of same shape but slightly smaller than the cartridges with their own seal, described in EP 1 654 966, to allow sufficient space to the cartridge sealing adapter to be properly inserted between the extraction cage and the cartridge. The sealing adapter can be provided in the kit for successive extraction in the extraction device of a plurality of cartridges. The sealing adapter can be replaced after a certain number of extractions have been carried out in the device.

## Claims

1. Beverage extraction system (1) for preparing a beverage from a single-use cartridge using fluid injected under pressure and comprising a dished body (14) containing beverage ingredients to be extracted, a beverage delivery membrane (15) closing the dished body which can be perforated under the effect of the pressure of fluid within the cartridge, said system comprising:
a beverage extraction device intended to accept the cartridge and comprising:
an injection cage (4) comprising fluid injection means (8, 9), and a cartridge support (5) comprising perforating means (12) for perforating the delivery membrane of the cartridge under the effect of the pressure of fluid in the cartridge, wherein
the injection cage comprises a free circumferential pressing edge (11) with at least one corrugated portion,
wherein it further comprises:
a cartridge sealing adapter (30, 300, 304, 305, 306, 320, 330,50,74) insertable in the injection cage to create sealing effect along at least a portion of the wall of the dished body which provides a sealing barrier to the liquid coming out of the injection means, between the injection means (8, 9) and
the pressing edge (11), when the cartridge is tightly encased between the injection cage (4) and the cartridge support (5) therefore enabling the pressure to rise inside the cartridge (3B, 3C) and the delivery membrane (15) to perforate against the cartridge support (5),
wherein the cartridge sealing adapter (30, 300, 304, 305, 306) is connectable in the injection cage (4),
wherein the outer surface of the adapter has a greater surface adhesiveness with respect to the injection cage than the inner surface has an adhesiveness with respect to the cartridge so that upon opening of the extraction and removal of the cartridge, the cartridge adapter is retained in place in the injection cage and wherein the cartridge sealing adapter. (30) ends internally above the said pressing edge (11) in the injection cage (4).

2. System according to claim 1, wherein the cartridge sealing adapter is free of connection with respect to the cartridge upon opening of the extraction device.

3. System according to claims 1, wherein the cartridge sealing adapter is press-fitted in the injection cage.

4. System according to claims 1, wherein the cartridge sealing adapter is connected to the injection cage by piercing members such as blades (9) housed inside the injection cage.

5. System according to any of the preceding claims, wherein the sealing adapter has a generally truncated form and has a closed upper end (310) at its smaller transversal section.

6. Kit intended for a beverage extraction system comprising an injection cage (4) comprising fluid injection means (8, 9), and a cartridge support (5) comprising perforating means (12) for perforating the delivery foil (15) of single-use cartridges (3B, 3C) under the effect of the pressure of fluid in the cartridges, wherein the injection cage comprises a free circumferential pressing edge with at least one corrugated portion,
said kit comprising:
a series of single-use cartridges (3B, 3C); each one comprising a dished body (14) containing beverage ingredients to be extracted, a beverage delivery foil (15) closing the dished body which can be perforated under the effect of the pressure of fluid within the cartridges,
at least one cartridge sealing adapter insertable in the injection cage of the beverage extraction system to create sealing effect along at least a portion of the wall of the dished body which provides a sealing barrier to the liquid coming out of the injection means, between the injection means
and the pressing edge, when the cartridge is tightly encased between the injection cage (4) and the cartridge support (5) therefore enabling the pressure to rise inside the cartridge and the delivery foil to perforate against the cartridge support,
wherein the outer surface of the adapter has a greater surface adhesiveness to the injection cage than the inner surface has an adhesiveness to the cartridge so that upon opening of the
extraction and removal of the cartridge, the cartridge adapter is retained in place in the injection cage and wherein the portion of adhesive surface is effective to adhere to the surfaces of the injection cage by effect of pressure and/or mechanical anchoring and/or heat.

7. Kit according to claim 6, wherein the cartridge sealing adapter is made of rubber-elastic material or is made of a compressible plastic.

8. Method for inserting a cartridge sealing adapter into a beverage extraction device; said adapter being adapted to provide a substantially watertight sealing arrangement, once in position, between a beverage extraction system and a cartridge containing beverage ingredients comprising:
- providing a die (70) comprising means (71) for applying the sealing adapter to the beverage extraction device,
- pressing the die relatively to at least one part (11) of the the extraction device and allowing the sealing adapter to fix to this part,
- removing the die (70) while a sealing adapter (74) is formed and remains fixed to the part of the beverage extraction device.

9. Method according to claim 8, wherein a liquid or viscous sealing material is placed in a receiving portion of the die; said material becoming solid when the die is pressed to the part of the beverage extraction device.

10. Method according to claim 9, wherein a pause is allowed during the pressing step to allow the sealing material to become solid and/or to fix to the part of the extraction device.

11. Method according to claim 10, wherein the sealing material is a polymer that polymerizes when the die is pressed relatively to the part of the extraction device.

12. Method according to claim 10, wherein the sealing material is a liquid silicone rubber or a liquid rubber adhesive.

## Patentansprüche

1. Getränkeextraktionssystem (1) zur Zubereitung eines Getränks aus einer Einweg-Kapsel unter Einsatz einer unter Druck eingespritzten Flüssigkeit mit einem konkav gewölbten Körper (14), welcher zu extrahierende Getränkeinhaltsstoffe enthält, einer den konkav gewölbten Körper abschließenden Getränkeabgabemembran (15), die unter Einwirkung des Flüssigkeitsdrucks in der Kapsel perforiert werden kann, wobei das System Folgendes umfasst:
Eine Getränkeextraktionsvorrichtung zur Aufnahme der Kapsel, mit:
Einem Einspritzkäfig (4), der Flüssigkeitseinspritzeinrichtungen (8, 9) und einen Kapselhalter (5) mit Perforiereinrichtungen (12) zum Perforieren der Abgabemembran der Kapsel unter Einwirkung des Flüssigkeitsdrucks in der Kapsel aufweist, wobei der Einspritzkäfig eine freie, umlaufende Druckkante (11) mit mindestens einem gewellten Abschnitt aufweist,
wobei sie weiterhin Folgendes umfasst:
einen Kapseldichtungsadapter (30, 300, 304, 305, 306, 320, 330, 50, 74), der in den Einspritzkäfig einsetzbar ist, um eine Dichtwirkung zumindest entlang einem Teil der Wand des konkav gewölbten Körpers zu erzeugen, der eine Dichtungssperre für die aus der Einspritzeinrichtung kommenden Flüssigkeit zwischen der Einspritzeinrichtung (8, 9) und der Druckkante (11) darstellt, wenn die Kapsel fest zwischen dem Einspritzkäfig (4) und dem Kapselhalter (5) eingeschlossen ist, wodurch der Druck in der Kapsel (3B, 3C) ansteigen kann und die Abgabemembran (15) an dem Kapselhalter (5) perforiert werden kann,
wobei der Kapseldichtungsadapter (30, 300, 304, 305, 306) in dem Einspritzkäfig (4) anschließbar ist,
wobei die Außenfläche des Adapters eine größere Oberflächenhaftung in Bezug auf den Einspritzkäfig aufweist als die Innenfläche in Bezug auf die Kapsel, so dass bei Beginn der Extraktion und Entfernung der Kapsel der Kapseladapter in dem Einspritzkäfig an seinem Platz bleibt und wobei der Kapseldichtungsadapter (30) innen oberhalb der Druckkante (11) in dem Einspritzkäfig (4) endet.

2. System gemäß Anspruch 1, wobei der Kapseldichtungsadapter keine Verbindung bezüglich der Kapsel beim Öffnen der Extraktionsvorrichtung eingeht.

3. System gemäß Anspruch 1, wobei der Kapseldichtungsadapter mit Presspassung in den Einspritzkäfig eingesetzt ist.

4. System gemäß Anspruch 1, wobei der Kapseldichtungsadapter über Durchstoßteile wie in dem Einspritzkäfig untergebrachte Klingen (9) mit dem Einspritzkäfig verbunden ist.

5. System gemäß einem der vorhergehenden Ansprüche, wobei der Dichtungsadapter im Wesentlichen kegelstumpfförmig ist und ein geschlossenes oberes Ende (310) an seinem kleineren Querabschnitt aufweist.

6. Bausatz für ein Getränkeextraktionssystem mit einem Einspritzkäfig (4), der Flüssigkeitseinspritzeinrichtungen (8, 9) und einen Kapselhalter (5) mit Perforiereinrichtungen (12) zum Perforieren der Abgabefolie (15) von Einweg-Kapseln (3B, 3C) unter Einwirkung des Flüssigkeitsdrucks in den Kapseln aufweist, wobei der Einspritzkäfig eine freie, umlaufende Druckkante mit mindestens einem gewellten Abschnitt aufweist,
wobei der Bausatz Folgendes umfasst:
eine Reihe von Einweg-Kapseln (3B, 3C); wobei jede einen konkav gewölbten Körper (14) aufweist, der zu extrahierende Getränkeinhaltsstoffe enthält, eine den konkav gewölbten Körper abschließende Getränkeabgabefolie (15), die unter Einwirkung des Flüssigkeitsdrucks in den Kapseln perforiert werden kann,
mindestens einen Kapseldichtungsadapter, der in den Einspritzkäfig des Getränkeextraktionssystems einführbar ist, um entlang zumindest einem Teil der Wand des konkav gewölbten Körpers eine Dichtwirkung zu erzeugen, die eine Dichtungsgrenze für die aus der Einspritzeinrichtung kommende Flüssigkeit darstellt,
zwischen der Einspritzeinrichtung und der Druckkante, wenn die Kapsel dicht zwischen dem Einspritzkäfig (4) und dem Kapselhalter (5) eingeschlossen ist, wodurch der Druck in der Kapsel ansteigen kann und die Abgabefolie an dem Kapselhalter perforiert werden kann,
wobei die Außenfläche des Adapters eine größere Oberflächenhaftung an dem Einspritzkäfig aufweist als die Innenfläche an der Kapsel, so dass bei Beginn der Extraktion und Entfernung der Kapsel der Kapseladapter an seinem Platz in dem Einspritzkäfig bleibt, und wobei der Bereich der Haftfläche wirksam an den Oberflächen des Einspritzkäfigs unter Einwirkung von Druck und/oder mechanischer Verankerung und/oder Wärme haftet.

7. Bausatz gemäß Anspruch 6, wobei der Kapseldichtungsadapter aus gummielastischem Material oder aus einem zusammendrückbarem Kunststoff besteht.

8. Verfahren zum Einsetzen eines Kapseldichtungsadapters in eine Getränkeextraktionsvorrichtung; wobei der Adapter geeignet ist, eine im Wesentlichen wasserdichte Dichtungsanordnung einmal in Stellung zwischen einem Getränkeextraktionssystem und einer Getränkeinhaltsstoffe enthaltenden Kapsel bereitzustellen, mit den Schritten:
- Vorsehen einer Form (70) mit Einrichtungen (71) zum Anbringen des Dichtungsadapters an der Getränkeextraktionsvorrichtung,
- Andrücken der Form relativ an mindestens ein Teil (11) der Extraktionsvorrichtung und Ermöglichen der Befestigung des Dichtungsadapters an diesem Teil,
- Entfernen der Form (70), während ein Dichtungsadapter (74) ausgebildet wird und an dem Teil der Getränkeextraktionsvorrichtung befestigt bleibt.

9. Verfahren gemäß Anspruch 8, wobei ein flüssiges oder viskoses Dichtungsmaterial in einem Aufnahmeabschnitt der Form angeordnet wird; wobei das Material fest wird, wenn die Form an den Teil der Getränkeextraktionsvorrichtung angedrückt wird.

10. Verfahren gemäß Anspruch 9, wobei während dem Andrückschritt eine Pause zugelassen wird, um das Dichtungsmaterial fest werden zu lassen und/oder an dem Teil der Extraktionsvorrichtung zu befestigen.

11. Verfahren gemäß Anspruch 10, wobei das Dichtungsmaterial ein Polymer ist, das polymerisiert, wenn die Form relativ an den Teil der Extraktionsvorrichtung angedrückt wird.

12. Verfahren gemäß Anspruch 10, wobei das Dichtungsmaterial aus einem flüssigen Silikongummi oder einem flüssigen Silikonkleber besteht.

## Revendications

1. Système (1) d'extraction de boisson pour la préparation d'une boisson à partir d'une cartouche à usage unique utilisant du fluide injecté sous pression et comprenant un corps (14) bombé contenant des ingrédients de boisson à extraire, une membrane (15) de distribution de boisson fermant le corps bombé qui peut être perforée sous l'effet de la pression de fluide à l'intérieur de la cartouche, ledit système comprenant :
un dispositif d'extraction de boisson destiné à recevoir la cartouche et comprenant :
une cage (4) d'injection comprenant des moyens (8, 9) d'injection de fluide, et un support (5) de cartouche comprenant des moyens (12) de perforation pour perforer la membrane de distribution de la cartouche sous l'effet de la pression de fluide dans la cartouche, la cage d'injection comprenant un bord (11) de pression circonférentiel libre avec au moins une partie ondulée,
et comprenant en outre :
un adaptateur (30, 300, 304, 305, 306, 320, 330, 50, 74) d'étanchéité de cartouche insérable dans la cage d'injection pour créer un effet d'étanchéité le long d'au moins une partie de la paroi du corps bombé qui fournit une barrière d'étanchéité pour le liquide sortant des moyens d'injection, entre les moyens (8, 9) d'injection et le bord (11) de pression, lorsque la cartouche est solidement encastrée entre la cage (4) d'injection et le support (5) de cartouche permettant ainsi à la pression d'augmenter à l'intérieur de la cartouche (3B, 3C) et à la membrane (15) de distribution d'être perforée contre le support (5) de cartouche,
dans lequel l'adaptateur (30, 300, 304, 305, 306) d'étanchéité de cartouche est susceptible d'être raccordé dans la cage (4) d'injection,
dans lequel l'adhésivité de surface de la surface extérieure de l'adaptateur par rapport à la cage d'injection est plus grande que l'adhésivité de la surface intérieure par rapport à la cartouche de manière à ce que lors du commencement de l'extraction et de l'enlèvement de la cartouche, l'adaptateur de cartouche est maintenu en place dans la cage d'injection et dans lequel l'adaptateur (30) d'étanchéité de cartouche se termine à l'intérieur au-dessus dudit bord (11) de pression dans la cage (4) d'injection.

2. Système selon la revendication 1, dans lequel l'adaptateur d'étanchéité de cartouche est exempt de liaison par rapport à la cartouche lors de l'ouverture du dispositif d'extraction.

3. Système selon la revendication 1, dans lequel l'adaptateur d'étanchéité de cartouche est placé dans la cage d'injection par ajustement serré.

4. Système selon la revendication 1, dans lequel l'adaptateur d'étanchéité de cartouche est relié à la cage d'injection par des organes de perçage comme des lames (9) logées à l'intérieur de la cage d'injection.

5. Système selon l'une quelconque des revendications précédentes, dans lequel l'adaptateur d'étanchéité a une forme en général tronconique et a une extrémité (310) supérieure fermée au niveau de sa plus petite coupe transversale.

6. Kit destiné pour un système d'extraction de boisson comprenant une cage (4) d'injection comprenant des moyens (8, 9) d'injection de fluide, et un support (5) de cartouche comprenant des moyens (12) de perforation pour perforer le film (15) de distribution de cartouches (3B, 3C) à usage unique sous l'effet de la pression de fluide dans les cartouches, dans lequel la cage d'injection comprend un bord de pression circonférentiel libre avec au moins une partie ondulée,
ledit kit comprenant :
une série de cartouches (3B, 3C) à usage unique ; chacune comprenant un corps (14) bombé contenant des ingrédients de boisson à extraire, un film (15) de distribution de boisson fermant le corps bombé qui peut être perforé sous l'effet de la pression de fluide à l'intérieur des cartouches,
au moins un adaptateur d'étanchéité de cartouche insérable dans la cage d'injection du système d'extraction de boisson pour créer un effet d'étanchéité le long d'au moins une partie de la paroi du corps bombé qui fournit une barrière d'étanchéité pour le liquide sortant des moyens d'injection, entre les moyens d'injection et le bord de pression, lorsque la cartouche est solidement encastrée entre la cage (4) d'injection et
le support (5) de cartouche permettant ainsi à la pression d'augmenter à l'intérieur de la cartouche et au film de distribution d'être perforé contre le support de cartouche, dans lequel la surface extérieure de l'adaptateur a une plus grande adhésivité de surface à la cage d'injection que la surface intérieure à la cartouche de manière à ce que lors du commencement de l'extraction et de l'enlèvement de la cartouche,
l'adaptateur de cartouche est maintenu en place dans la cage d'injection et dans lequel la partie de la surface adhésive est efficace pour adhérer aux surfaces de la cage d'injection par l'effet de la pression et / ou d'un encrage mécanique et / ou de la chaleur.

7. Kit selon la revendication 6, dans lequel l'adaptateur d'étanchéité de cartouche est réalisé en un matériau ayant l'élasticité du caoutchouc ou est réalisé en un plastique compressible.

8. Procédé pour l'insertion d'un adaptateur d'étanchéité de cartouche dans un dispositif d'extraction de boisson ; ledit adaptateur étant adapté pour fournir un arrangement d'étanchéité essentiellement étanche à l'eau, une fois en position, entre le système d'extraction de boisson et une cartouche contenant des ingrédients de boisson comprenant les étapes suivantes :
- fournir une forme (70) comprenant des moyens (71) pour appliquer l'adaptateur d'étanchéité sur le dispositif d'extraction de boisson,
- presser la forme relativement à au moins une partie (11) du dispositif d'extraction et permettre la fixation de l'adaptateur d'étanchéité à cette partie,
- enlever la forme (70) pendant qu'un adaptateur (74) d'étanchéité est formé et reste fixé à la partie du dispositif d'extraction de boisson.

9. Procédé selon la revendication 8, dans lequel un matériau d'étanchéité liquide ou visqueux est placé dans une partie de réception de la forme ; ledit matériau devenant solide lorsque la forme est pressée contre la partie du dispositif d'extraction de boisson.

10. Procédé selon la revendication 9, dans lequel une pause est autorisée pendant l'étape consistant à presser, de manière à permettre au matériau d'étanchéité de devenir solide et / ou de se fixer à la partie du dispositif d'extraction.

11. Procédé selon la revendication 10, dans lequel le matériau d'étanchéité est un polymère qui polymérise lorsque la forme est pressée relativement à la partie du dispositif d'extraction.

12. Procédé selon la revendication 10, dans lequel le matériau d'étanchéité est un caoutchouc silicone liquide ou un adhésif de caoutchouc liquide.
